Europäisches Patentamt

(19) European Patent Office

Office européen des brevets

(11) Publication number: **0 060 624**
A2

## (12) EUROPEAN PATENT APPLICATION

(21) Application number: **82300897.4**

(22) Date of filing: **22.02.82**

(51) Int. Cl.³: **F 16 H 3/08**

(30) Priority: **10.03.81 GB 8107559**

(43) Date of publication of application: **22.09.82**
**Bulletin 82/38**

(84) Designated Contracting States: **AT BE DE FR GB IT NL SE**

(71) Applicant: **AUTOMOTIVE PRODUCTS PUBLIC LIMITED COMPANY, Tachbrook Road, Leamington Spa Warwickshire CV31 3ER (GB)**

(72) Inventor: **Standbridge, Peter John, 18, Staunton Road, Leamington Spa Warwickshire (GB)**

(74) Representative: **Adkins, Michael et al, Withers & Rogers 4 Dyer's Buildings, Holborn London, EC1N 2JT (GB)**

(54) **Rotary transmission.**

(57) The transmission includes a drive input shaft 11, a drive output shaft 21 and first and second clutches 13, 14 drivable by the input shaft. The clutches include driven members 13a, 14a spaced apart and journalled for rotation on the input shaft and gear trains 15, 22; 16, 25; 17, 24; and 18, 25 are provided for transmitting drive from the driven members to the drive output shaft. The gear trains provide increasing speed ratios and the clutches are arranged to drive respectively through the gear trains of alternate speed ratios 1, 2, 3 and 4. An oil pump drive gear 34 is provided on the input shaft in the space 36 between the driven members to enable drive to be transmitted from the input shaft to a pump 35.

- 1 -

## ROTARY TRANSMISSION

This invention relates to rotary transmissions of the dual clutch kind by which is meant a transmission having gear trains each being one of a set providing a series of increasing speed ratios, and two clutches independently operable and providing alternative drive paths through the gear trains between a common input and a common output, the gear trains of alternate speed ratios in the set being driven respectively through one and the other clutch.

The invention is particularly though not exclusively applicable to drive transmissions for motor vehicles.

Examples of transmissions of the dual clutch kind are shown in British Patent Specifications Nos. 145,827 (Bramley-Moore), 585,716 (Kegresse), 795,260 (David Brown) and 1,125,267 (Bosch). To the best of our knowledge, none of these prior proposals has been commercially adopted.

It has been proposed to derive transmissions of the dual clutch kind from conventional single clutch manual-change transmissions with which they can share many component parts. It has been realised however, that some arrangements of transmission components can result in a transmission of relatively short overall length. Such a transmission is particularly advantageous for transverse-engined front wheel drive motor vehicles where spatial parameters often dictate engine/
transmission units of very short overall length.

Transmissions of the dual clutch kind may include hydraulic control apparatus
and may further be provided with a hydrodynamic coupling for drive take-up
from rest.  Such transmissions require a pump, preferably driven directly by the
engine, to supply hydraulic fluid under pressure to the hydraulic apparatus.

It has been proposed to situate the pump at one end or other of the drive
shaft of a hydraulic transmission but this can substantially increase the overall
transmission length, which is undesirable, and dictate the use of relatively
large pump drive gear wheels.

According to the present invention there is provided a rotary power
transmission comprising a drive input shaft, first and second clutches arranged
to be driven by said drive input shaft, said clutches including driven members
spaced apart and journalled for rotation on said drive input shaft, gear trains
for transmitting drive from the driven members to the drive output shaft, said
gear trains providing increasing speed ratios and said clutches being arranged
to drive respectively through the gear trains of alternate speed ratios, and an oil
pump drive gear provided on the drive input shaft in the space between said
driven members. By arranging the pump drive gear in such a manner it is

0060624

possible to avoid positioning the pump at one end of the drive input shaft thereby avoiding any increase in overall length of the transmission.

Preferably the drive members are rotatably fast with driving gears of the trains and the pump drive gear is provided on the drive shaft between two driving gears on the respective driven members. The oil pump drive gear preferably meshes with a further gear drivably connected to a drive shaft of the pump to position the drive shaft clear of the gear trains. Such an arrangement enables the oil pump to be mounted out of the plane of the gear trains.

The invention confers the additional advantage that the number of concentric members about the clutch drive shaft is kept to a minimum whilst ensuring that the oil pump is driven at engine speed.

Other features of the invention are included in the following description of a preferred embodiment shown, by way of example only, in the accompanying drawings, in which :

Fig. 1 is a diagrammatic representation of a  four speed transmission of the dual clutch kind incorporating the invention, and

Fig. 2 is a cross section of part of the transmission of Fig. 1 on the line II -II in Fig. 1.

0060624

With reference to the drawings there is shown a transmission having a set of four gear trains providing a series of increasing speed ratios.

Drive from an engine (not shown) is transmitted via a drive input shaft 11 through a torque converter 12 and clutch 14, situated at one side of the transmission, to first and third speed ratios. Drive is provided through another clutch 13, at the other side of the transmission, to second and fourth speed ratios.

The first and third speed ratios are provided by two gear trains comprising driving gears 15, 17 and driven gears 22, 24 respectively. The second and fourth speed ratios are provided by two gear trains comprising driving gears 16, 18 and driven gears 23, 25 respectively.

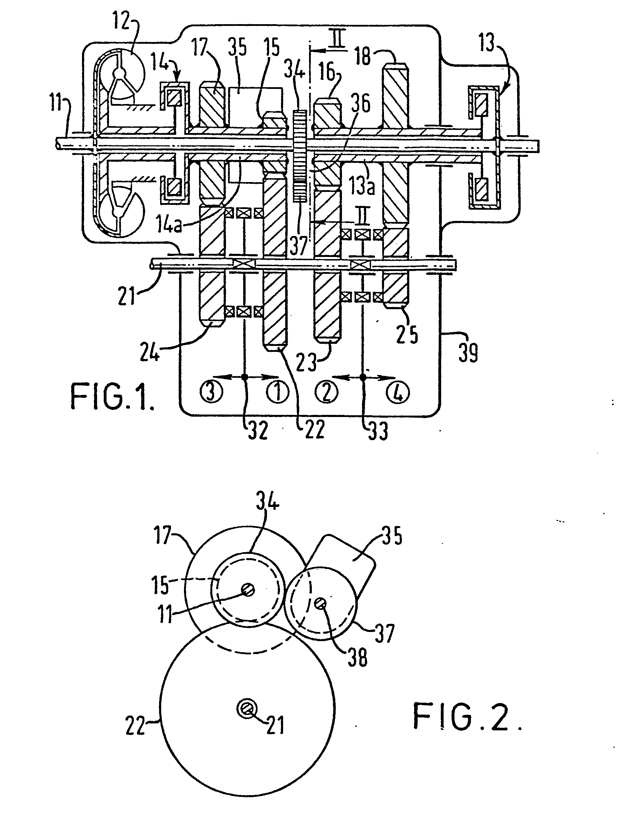

The driving gears 16, 18; 15, 17 of the gear trains are rotatably fast with respective tubular driven members 13a; 14a of the clutches 13; 14. The driven members 13a, 14a are journaled coaxially for rotation on the input shaft 11. The driven gears of the gear trains are selectively connectable to an output shaft 21 by synchroniser assemblies 32, 33 movable in the directions of arrows in Figure 1 to select ratio 1, 2, 3 or 4.

Clutch control and speed ratio selection is preferably by automatic means (not shown), speed ratios being selected sequentially from the set.

In operation a change of speed ratio comprises the steps of disengaging the non-driving clutch, pre-selecting the next required speed ratio, disengaging the driving clutch whilst simultaneously engaging the non-driving clutch, deselecting the hitherto selected speed ratio and re-engaging the now non-driving clutch.

The torque converter is provided for drive take-up from rest, drive in fourth ratio being provided through clutch 13 for maximum fuel economy.

A drive gear 34 for an oil pump 35 (Fig. 2) is provided on the input shaft 11. The gear 34 lies in a space 36 between adjacent ends of clutch driven members 13a, 14a and a suitable working clearance is defined between the said adjacent ends and the side surfaces of the gear. The gear may be formed integrally with the input shaft 11 or may comprise a gear wheel rotatably secured to the input shaft. The drive gear 34 meshes with a further gear 37 mounted on a drive shaft 38 of the pump 35. The pump drive shaft 38 is parallel with the input shaft 11 and lies clear of the driving gears 15 or 16. In that way the pump can be mounted out of the plane of the gear trains and thus not add significantly to the overall length of the transmission. Also the pump can conveniently be mounted in the same housing 39 as the transmission.

It may be seen that if the oil pump drive were mounted on the drive input shaft 11 at either side of the transmission excessively large gear wheels would be needed to clear the torque converter 12 at one side and the clutch 13 at the other side.

CLAIMS

1. A rotary power transmission comprising a drive input shaft (11), a drive output shaft (21) first and second clutches (13, 14) arranged to be driven by said drive input shaft, said clutches including driven members (13a, 14a) spaced apart and journalled for rotation in said drive input shaft gear trains (15,22; 16,23; 17,24 and 18,25) for transmitting drive from the driven members to the drive output shaft, said gear trains providing increasing speed ratios (1, 2, 3 and 4) and said clutches being arranged to drive respectively through the gear trains of alternate speed ratios, characterised in that an oil pump drive gear (34) is provided on the drive input shaft (11) in the space (36) between members (13a, 14a).

2. A rotary power transmission according to claim 1 characterised in that the driving members (13a, 14a) are rotatably fast with driving gears (16, 18; 15, 17) of the gear trains and the pump drive gear (34) is provided on the drive shaft between the driving gears (15, 16) on the respective driven members.

3. A rotary power transmisson according to claim 1 or 2 characterised in that the oil pump drive gear (34) meshes with a further gear (37) to position the drive shaft clear of the gear trains.

4.    A rotary power transmission according to claim 3 characterised in that the further gear (37) has an axis of rotation parallel with said drive input shaft (11).

5.    A rotary power transmission according to any preceding claim characterised in that the oil pump drive gear (34) comprises a gear wheel rotatably fast with the drive input shaft (11).

6.    A rotary power transmission according to any preceding claim characterised in that a working clearance is defined between each side of the pump drive (34) gear and adjacent surfaces of the clutch driven members (13a, 14a).

7.    A rotary power transmission according to any preceding claim characterised in that the clutch driven members (13a, 14a) include elongate tubes each of which extends between its associated clutch (13, 14) and a position adjacent the oil pump drive gear (34), the drive input shaft (11) passing coaxially through the tubes.

8.    A rotary power transmission according to any preceding claim characterised in that a housing (39) is provided for the transmission; said housing containing the oil pump (35) driven from said oil pump drive gear (34).

FIG.1.

FIG.2.